# EUROPEAN PATENT SPECIFICATION

(11) **EP 0 552 543 B1**
(45) Date of publication and mention of the grant of the patent: **29.10.1997**
(21) Application number: 92310942.5
(22) Date of filing: 01.12.1992
(51) Int. Cl.: G03B 17/18

(54) **Data exchange system between camera and terminal device**
System zum Datenaustausch zwischen Kamera und Kommunikationsdatenendgerät
Système d'échange de données entre camera et dispositif terminal de communication

(30) Priority: 21.01.1992 JP 29104/92
(43) Date of publication of application: 28.07.1993
(73) Proprietor: NIKON CORPORATION, Tokyo (JP)
(72) Inventor: Ogawa, Hidehiro, Funabashi-shi, Chiba-ken (JP)
(74) Representative: Burke, Steven David

(56) References cited:
- EP-A- 0 236 960
- EP-A- 0 407 861
- US-A- 4 423 934
- US-A- 4 519 692
- US-A- 4 647 176
- US-A- 4 853 733
- US-A- 5 032 857
- PATENT ABSTRACTS OF JAPAN, vol. 16, no. 167 (P-1342) 22 April 1992; & JP-A-04 014 030

## Description

### BACKGROUND OF THE INVENTION

### Field of the Invention

The present invention relates to a system for transmitting and receiving data to and from a camera by obtaining information on the camera or a photograph and communicating with the camera by using a commercially available pocket computer or electronic organizer and a camera IC card compatible therewith.

### Related Background Art

In the past, data has been exchanged with a camera to control various operations based on the data. A personal computer or a controller has been used as a unit to receive and transmit such data.

However, since such a unit is of large size or needs an AC power supply, it is inconvenient to carry it with the camera. Further, it is expensive.

United States Patent 4,853,733 describes a camera having two memories. A first memory stores a software program for effecting fundamental operations of the camera. A second memory stores optional functions which are desired by a photographer, and is rewritable by means of a peripheral device consisting of a ROM and a transfer circuit.

### SUMMARY OF THE INVENTION

In the light of the above, it would be desirable to provide a camera system which is ready to carry and economic.

The camera control system of the invention is defined in claim 1, and the corresponding camera control method is defined in claim 8. Preferred aspects of the present invention are set out in the dependent claims.

In an embodiment of the present camera system, the terminal device reads and displays the information of an IC card which stores the information on the camera and transmits the information to the camera when required to set an operating condition of the camera. Normally, information on a photograph is obtained from a display content of the terminal device, and a user takes a necessary action in accordance with the information. When a complex camera operation condition is to be set, necessary data is transmitted from the terminal device to the camera so that the camera operation condition is set in accordance with the data.

The explanation on the manipulation of the camera and the information on the location of a service station are displayed by the portable terminal device and the IC card, and necessary information is always available where they are carried with the camera. Further, it can be readily customized by interactive communication with the camera, and the setting of a data pack which has heretofore been complex is facilitated. In the past, a separate remote controller is needed to remotely control various functions of the camera, and it is necessary to design such a remote controller. By the use of the terminal device, only software need be designed and the number of development steps is reduced. Thus, an inexpensive system which has easy-to-use functions is provided.

### BRIEF DESCRIPTION OF THE DRAWINGS

Fig. 1A shows a system configuration of one embodiment of the present invention,
Fig. 1B shows a keyboard 7 of a terminal device 2,
Fig. 2 shows an example of a displayed image,
Figs. 3A to 3C show examples of displayed images,
Figs. 4A to 4C show examples of displayed images,
Figs. 5A to 5C show examples of the displayed images,
Figs. 6A to 6C show examples of displayed images,
Fig. 7 shows an example of a displayed image,
Figs. 8A to 8E show examples of displayed images,
Figs. 9A to 9C show examples of displayed images,
Fig. 10 shows a sequence of transmitting and receiving signals,
Fig. 11 shows a detailed block diagram of a terminal device and an IC card,
Fig. 12 shows a detailed block diagram of a camera, and
Fig. 13 shows a flow chart of a signal transmission and reception process.

### DETAILED DESCRIPTION OF THE PREFERRED EMBODIMENTS

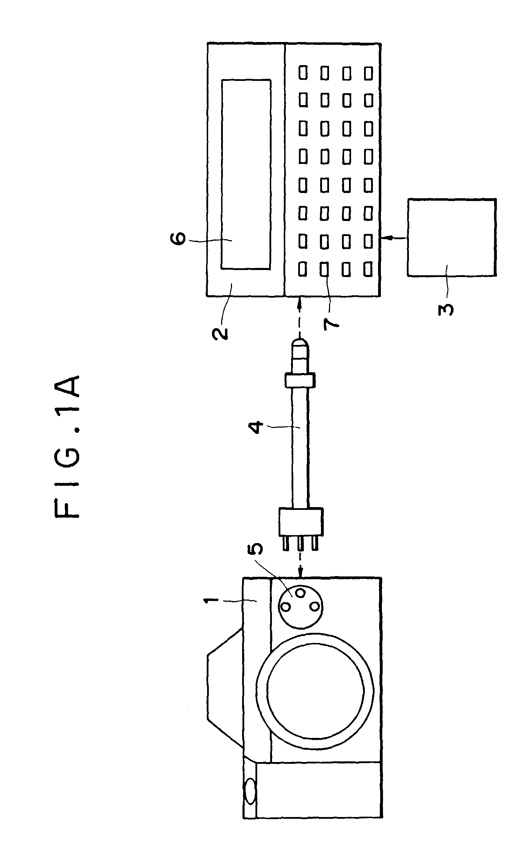

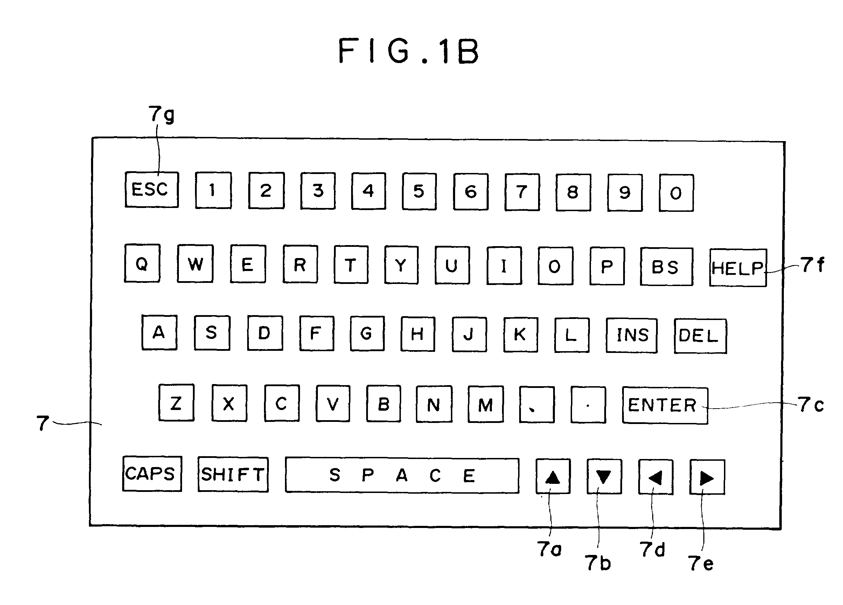

Fig. 1A shows a block diagram of one embodiment of the present invention. Numeral 1 denotes a camera, numeral 2 denotes a terminal device, numeral 3 denotes an IC card which is loadable to the terminal device 2 and which stores a program for driving the terminal device 2, numeral 4 denotes a cable for connecting the camera and the terminal device, numeral 5 denotes a connector of the camera which includes a signal line terminal for communicating with the terminal device 2, numeral 6 denotes a display of the terminal device and numeral 7 denotes a keyboard (see Fig. 1B) of the terminal device. A connector which engages with the connector 5 of the camera 1 is provided at one end of the connection cable 4, and a connector which engages with a communication connector (not shown) of the terminal device 2 is provided at the other end.

The electrical connection between the camera 1 and the terminal device 2 includes at least three signal lines, a ground line, a signal line (TX) for transmitting a stepping synchronous communication system signal (UART signal) and a receiving signal line (RX). The ground lines of the camera 1 and the terminal device 2, the TX terminal of the camera 1 and the RX terminal of the terminal device 2, and the RX terminal of the camera 1 and the TX terminal of the terminal device 2 are connected together, respectively.

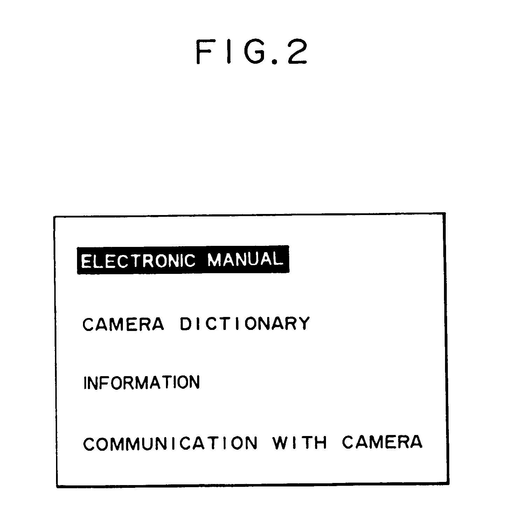

Fig. 2 shows a menu display screen of the display 6 when the terminal device 2 is driven by the camera IC card 3. Four items, "ELECTRONIC MANUAL", "CAMERA DICTIONARY", "INFORMATION" and "COMMUNICATION WITH CAMERA" are displayed, and only "ELECTRONIC MANUAL" is invertedly displayed. It indicates that "ELECTRONIC MANUAL" is selected as default. The inverted display is shifted to other item by depressing up/down keys 7a and 7b of the terminal device 2 shown in Fig. 1B. A desired item is selected by the up/down keys 7a and 7b and an execution key or an equivalent key is depressed to display the next image.

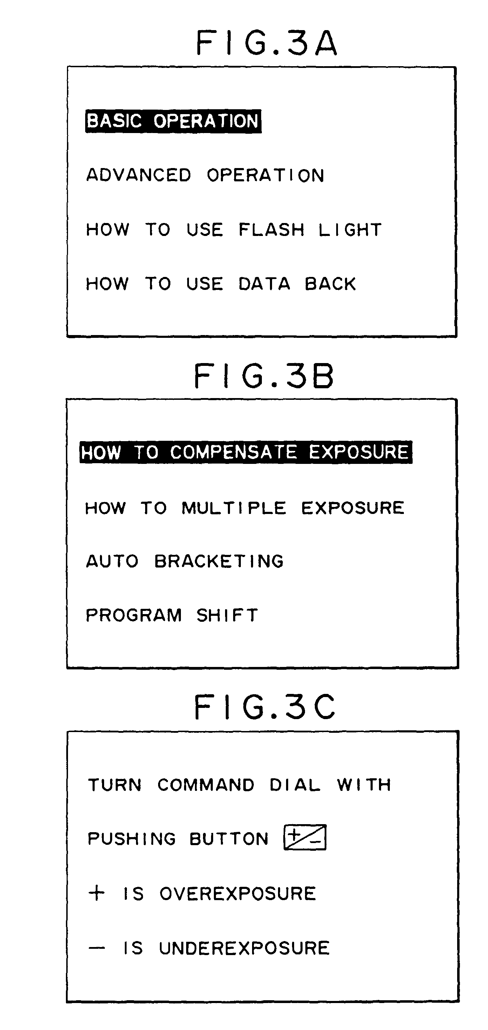

Figs. 3A to 3C show displays of the display 6 which appear when the execution key 7c is depressed while "ELECTRONIC MANUAL" of Fig. 2 is selected. They display description equivalent to that of an operation manual of the camera.

When the execution key 7c is depressed while "ELECTRONIC MANUAL" is selected, the display shown in Fig. 3A appears. Form items, "BASIC OPERATION", "ADVANCED OPERATION", "HOW TO USE FLASH LIGHT" and "HOW TO USE DATA BACK" are displayed. When "BASIC OPERATION" is selected by depressing the up/down keys 7a and 7b and the execution key 7c is depressed, four items, "HOW TO CORRECT EXPOSURE", "HOW TO MULTIPLE-EXPOSE", "AUTO-BRACKETING" and "PROGRAM SHIFT" appear. When "HOW TO CORRECT EXPOSURE" is selected by depressing the up/down keys 7a and 7b and depressing the execution key 7c, a manner to correct the exposure is displayed by a text, as shown in Fig. 3C. In a similar manner, description on "ADVANCED OPERATION", "HOW TO USE FLASH LIGHT" and "HOW TO USE DATA BACK" are displayed by texts.

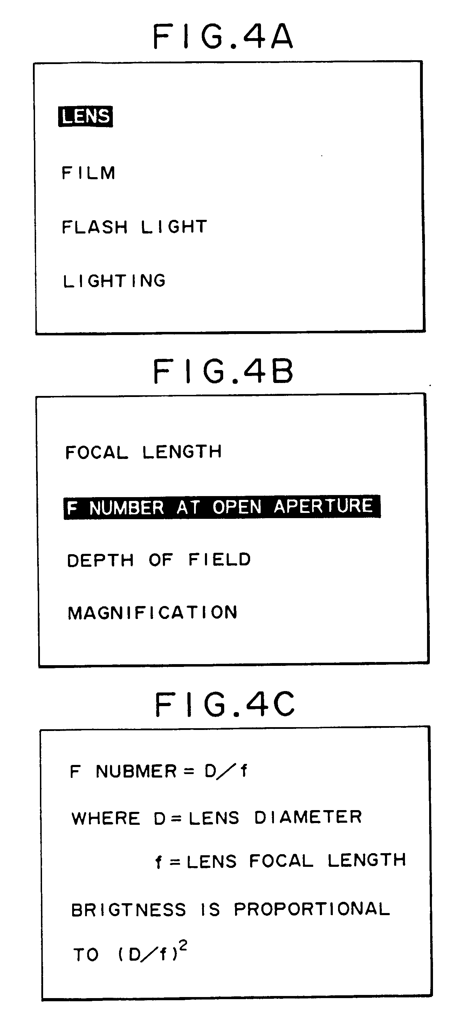

Figs. 4A to 4C show displays of the display 6 when "CAMERA DICTIONARY" in Fig. 2 is selected and the execution key 7c is depressed. Fig. 4A shows terminologies relating to the camera. Four items "LENS", "FILM", "FLASH LIGHT" and "LIGHTING" are displayed. When "LENS" is selected by depressing the up/down keys 7a and 7b and the execution key 7c is depressed, the display shown in Fig. 4B appears. Four items relating to the lens, "FOCAL LENGTH", "F NUMBER AT OPEN APERTURE", "DEPTH OF FIELD" and "MAGNIFICATION" are displayed as shown in Fig. 4B. When "F NUMBER AT OPEN APERTURE" is selected by depressing the up/down keys 7a and 7b and the execution key 7c is depressed, the description on the F number at the open aperture is displayed as shown in Fig. 4C.

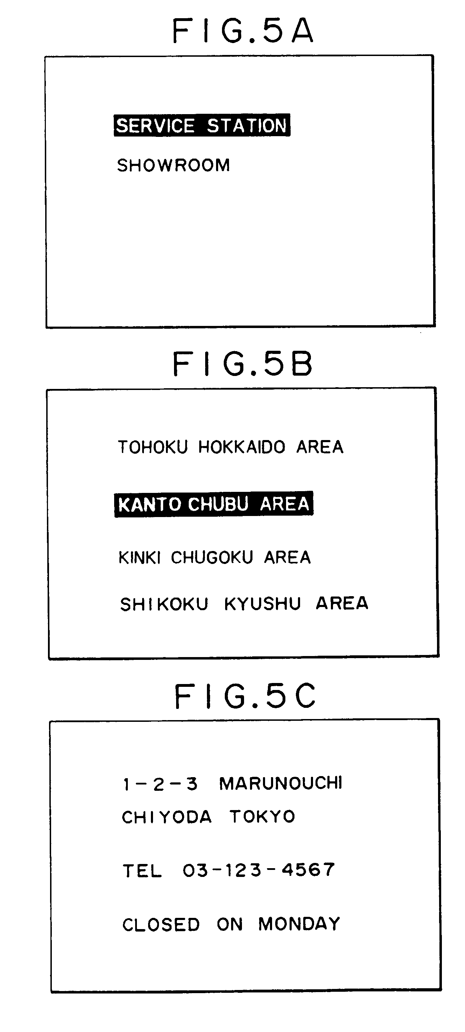

When "INFORMATION" of Fig. 2 is selected by depressing the up/down keys 7a and 7b and the execution key 7c is depressed, the display shown in Fig. 5A appears. Two items, "SERVICE STATION" and "SHOWROOM" are displayed as shown in Fig. 5A. When "SERVICE STATION" is selected by the up/down keys 7a and 7b and the execution key 7c is depressed, the display shown in Fig. 5B appears. Four local areas of the service stations in Japan, "TOHOKU, HOKKAIDO", "KANTO, CHUBU", "KINKI, CHUGOKU" and "SHIKOKU, KYUSHU" are displayed. When "KANTO, CHUBU" is selected by depressing the up/down keys 7a and 7b and the execution key 7c is depressed, location, phone number and closed day of one of the service stations are displayed as shown in Fig. 5C. When there are other service stations in the "KANTO, CHUBU" area, other function key of the display device 2 is depressed so that they are sequentially displayed.

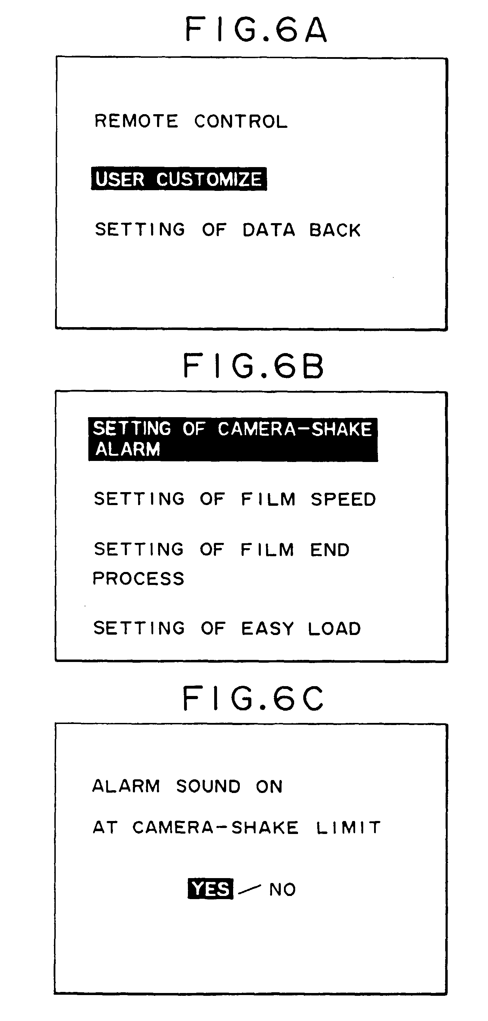

When "COMMUNICATION WITH CAMERA" of Fig. 2 is selected by depressing the up/down keys 7a and 7b, the camera 1 and the terminal device 2 may be connected by the cable 4 as shown in Fig. 1 to transmit or receive data between the camera 1 and the terminal device 2 or send a command. When "COMMUNICATION WITH CAMERA" of Fig. 2 is selected and the execution key 7c is depressed, the display shown in Fig. 6A appears. Three items, "REMOTE CONTROL", "USER CUSTOMIZATION" and "SETTING OF DATA BACK" are displayed. When "REMOTE CONTROL" is selected, the camera 1 may be operated from the terminal device 2. For example, a shutter speed may be changed or a shutter may be released. When "USER CUSTOMIZATION" is selected, the function of the camera may be set as the user desires. When "SETTING OF DATA BACK" is selected, the data back of the camera may be set from the terminal device 2.

When "USER CUSTOMIZATION" of Fig. 6A is selected by depressing the up/down keys 7a and 7b and the execution key 7c is depressed, the display shown in Fig. 6B appears. Four items, "SETTING OF ALARM FOR CAMERA SHAKE", "SETTING OF FILM SENSITIVITY", "SETTING OF PROCESS FOR END OF FILM" and "SETTING OF EASY LOAD" are displayed. When "SETTING OF ALARM FOR CAMERA SHAKE" is selected by depressing the up/down keys 7a and 7c and depressing the execution key 7c, the display of Fig. 6C appears. When an alarm by sound is required for a limit to the camera shake, "YES" is selected by depressing the up/down keys 7a and 7b, and when it is not required, "NO" is selected, and the execution key is depressed so that a signal is sent from the terminal device 2 to the camera 1 to allow the setting of the selected alarm in the camera 1.

Where a plurality of IC cards 3 of the terminal device 2 are provided one for each of the types of cameras 1, it causes a problem if the terminal device IC card B is used for the communication with the camera A, because the function and the data format vary from type to type of the camera. Accordingly, when the communication is to be made between the camera 1 and the terminal device 2, it is necessary to first identify the type. To this end, a command which requests a type code of the camera 1 is sent from the terminal device 2 to the camera 1, and the type data sent back from the camera is compared with the type code stored in the IC card. When the type codes match, the communication is permitted, and when they do not match, an error message is displayed on the display 6 of the terminal device 2 and further communication is inhibited.

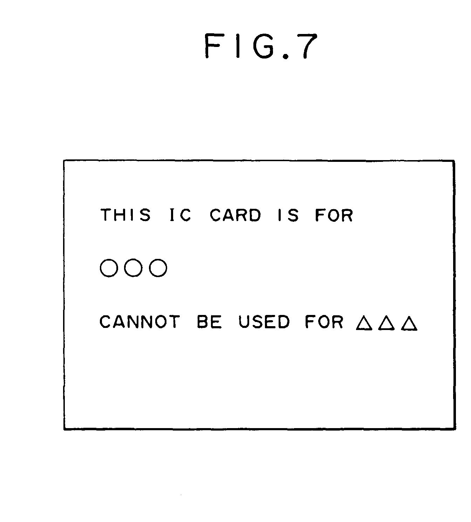

Fig. 7 shows an example of the error message displayed on the display 6. By using a character code of the type of camera as the type code, the error message as shown in Fig. 7 may be displayed.

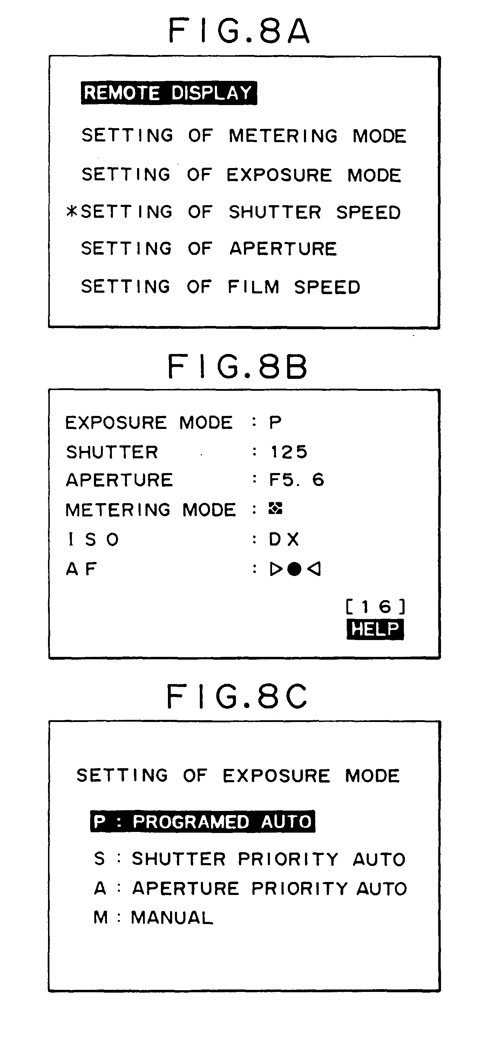

When "REMOTE CONTROL" of Fig. 6A is selected by depressing the up/down keys 7a and 7b and the execution key 7c is depressed, the display shown in Fig. 8A appears. Six items, "REMOTE DISPLAY", "SETTING OF METERING MODE", "SETTING OF EXPOSURE MODE", "SETTING OF SHUTTER SPEED", "SETTING OF APERTURE" and "SETTING OF FILM SENSITIVITY" are displayed.

In Fig. 8A, a mark "*" is put on "SETTING OF SHUTTER SPEED". It indicates that the selection of "SETTING OF SHUTTER SPEED" is not permitted because a programmed auto-exposure control mode or an aperture priority auto-exposure control mode is currently set as the auto-exposure control mode of the camera 1. The mark "∗" indicates the item which cannot be selected depending on the setting of the photographing control condition of the camera 1.

When "REMOTE DISPLAY" is selected by depressing the up/down keys 7a and 7b and the execution key 7c is depressed, the display as shown in Fig. 8B appears.

The display of Fig. 8B shows the current setting of the photographing control condition of the camera 1. In the example of Fig. 8B, the auto-exposure control mode is set to "P" or a programmed auto-exposure control mode, the shutter speed to attain a proper exposure is set to "125" or 1/125 second in accordance with a program diagram, the aperture is set to "F 5.6", the metering mode is set to a fine-split multi-pattern metering mode, a film having an ISO sensitivity of "DX" is not loaded, and an in-focus state is attained by AF or auto-focusing detection.

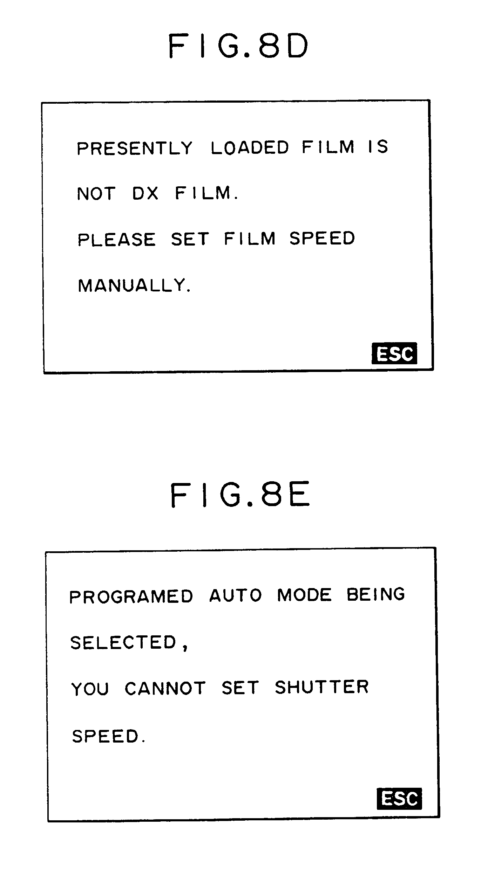

When a HELP key 7f of the keyboard 7 in Fig. 1B is depressed in accordance with the display of "HELP" in Fig. 8B, an error message shown in Fig. 8D is displayed in text to inform to the user that a DX film is not loaded and the ISO sensitivity should be manually set. When an ESC key 7g of the keyboard 7 is thereafter depressed in accordance with the display of "ESC" in Fig. 8D the display of Fig. 8B appears again. When the execution key 7c is depressed while the display of Fig. 8B appears, the display of Fig. 6A appears again.

Fig. 8C shows the display which appears when "SETTING OF EXPOSURE MODE" in Fig. 8A is selected. It includes four exposure control modes, "P: PROGRAMMED AUTO", "S: SHUTTER PRIORITY AUTO", "A: APERTURE PRIORITY AUTO" and "M: MANUAL". When "P: PROGRAMMED AUTO" or the programmed auto-exposure control mode is selected by depressing the up/down keys 7a and 7b and the execution key 7c is depressed, a signal is sent from the terminal device 2 to the camera 1 to set the programmed auto-exposure control mode.

When "SETTING OF SHUTTER SPEED" is selected by depressing the up/down keys 7a and 7b and the execution key 7c is depressed, an error message as shown by the text in Fig. 8E, that is, "PROGRAMMED AUTO MODE IS CURRENTLY SELECTED. YOU CANNOT SET SHUTTER SPEED." is displayed because the camera 1 is now in the programmed auto-exposure control mode.

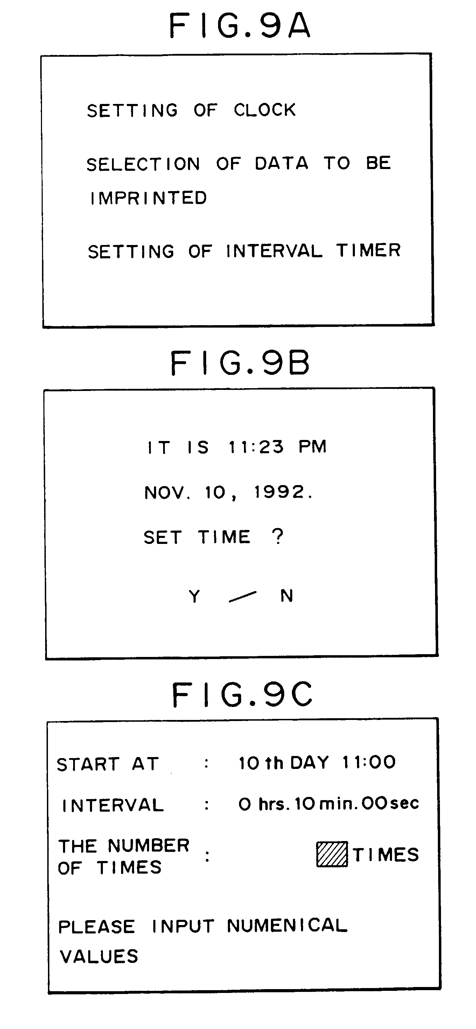

When "SETTING OF DATA BACK" of Fig. 6A is selected by depressing the up/down keys 7a and 7b and the execution key 7c is depressed, the display as shown in Fig. 9A appears. Three items, "SETTING OF TIME", "SETTING OF DATA TO BE IMPRINTED" and "SETTING OF INTERVAL TIMER" are displayed.

When "SETTING OF TIME" in Fig. 9A is selected by depressing the up/down keys 7a and 7b and the execution key 7c is depressed, the display as shown in Fig. 9B appears. It displays the current year, month, day, hour and minute by a clock built in the terminal device 2. The displayed time is sent to the camera 1 asking whether it is to be set in the camera 1. When the Y key of the keyboard 7 is depressed, it is sent to the camera 1 and set therein, and when the N key is depressed, the time is not set.

When "INTERVAL TIMER" in Fig. 9A is selected by the up/down keys 7a and 7b and the execution key 7c is depressed, the display as shown in Fig. 9C appears. It displays the information on the interval timer which was previously set, and the setting may be changed sequentially. A cursor is moved to the numeric areas of "START AT", "INTERVAL" and "THE NUMBER OF TIMES" in Fig. 9C so that the contents may be changed by depressing numerical keys of the keyboard 7. After the numeric value is entered, the execution key 7c is depressed so that the content set by the terminal device 2 is sent to the camera 1 and set therein.

Usually, a power supply of the camera is automatically turned off a predetermined time after certain operation. Usually, the time interval is between 8 - 16 seconds. However, there is a problem if the power supply of the camera 1 is turned off in such a short time after the communication with the terminal device 2 has been established, because when a command is to be sent to the camera 1 by manipulating the keyboard 7 of the terminal device 7, the manipulation of the keyboard 7 may not be completed in 8 - 16 seconds. To avoid such a problem, the turn-off of the power supply of the camera 1 is prevented by extending the timer interval when the communication is established, inhibiting the timer operation, or sending a specific command to the camera even if no transmission of the command or data to the camera is required while the terminal device 2 is not operated or the keyboard is manipulated.

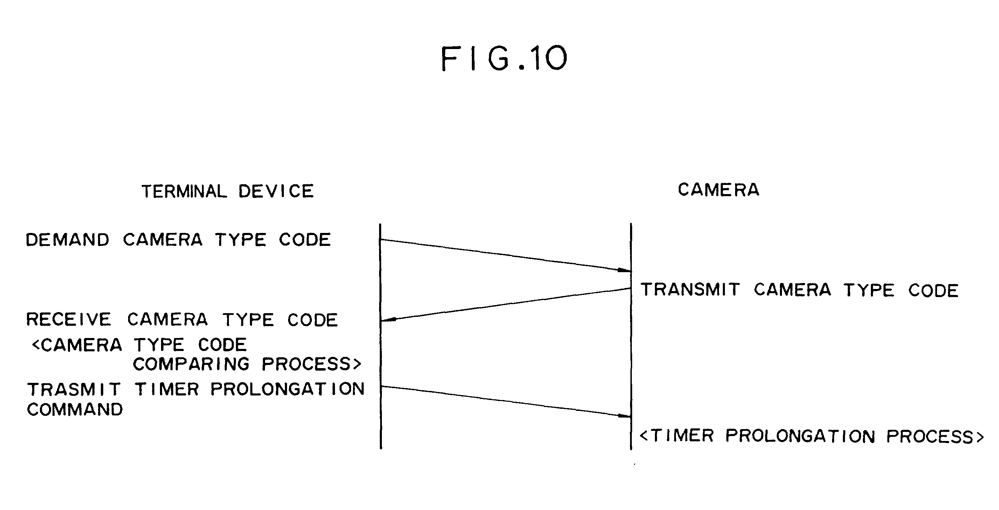

In Fig. 10, the terminal device 2 requests the type code data to the camera 1, and the camera 1 responds thereto to transmit the camera type code. The terminal device 2 compares the code with the code stored in the IC card 3, and if they match, it sends a timer prolongation command to the camera 1. If the type code of the camera 1 and the type code of the IC card 3 of the terminal device 2 do not match, the terminal device 2 displays an error message. An example thereof is shown in Fig. 7. When the character code which represents the type of camera is used as the type code, the error message is easy to recognize as shown in Fig. 7.

The timer prolongation command in Fig. 10 may be a command to inhibit the power-off by the timer for the camera 1, or a command to set a longer timer interval than a normal one. A command may be continuously sent at an interval shorter than the timer interval of the camera 1 during the operation of the terminal device 2 in order to prevent the power-off of the camera 1. In this manner, inadvertent power-off of the camera during the operation of the terminal device 2 is prevented.

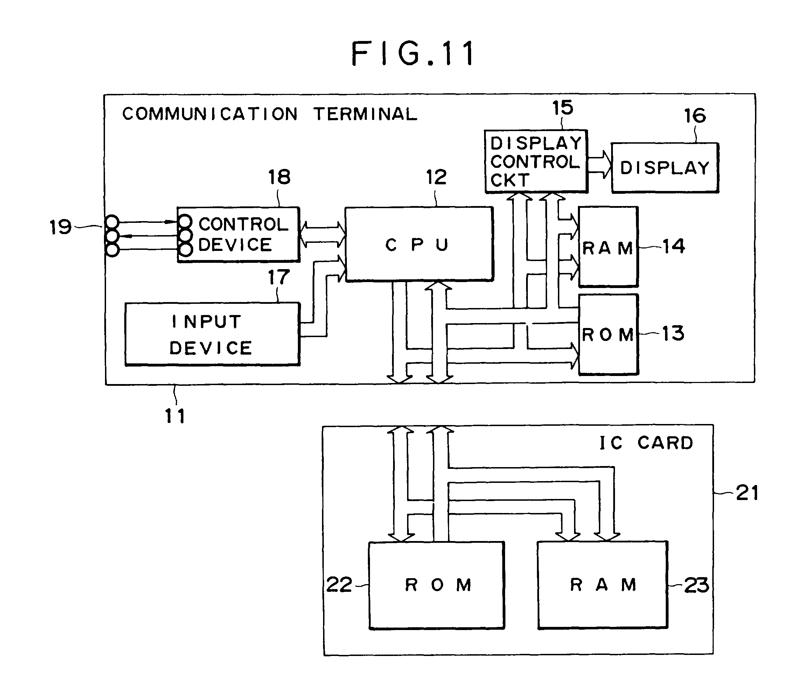

Fig. 11 shows a detailed internal configuration of the terminal device 2 and the IC card 3 shown in Fig. 1A. Numeral 11 corresponds to the terminal device 2 in Fig. 1A, numeral 12 denotes a CPU for carrying out an arithmetic operation and controlling the terminal device 2, numeral 13 denotes a ROM which stores a program for controlling the CPU, numeral 14 denotes a RAM for storing data, numeral 15 denotes a display control circuit such as an LCD driver, numeral 16 denotes a display such as an LCD, numeral 17 denotes an input device such as a keyboard for entering a command and data to the CPU, numeral 18 denotes a serial communication control device for serially communicating with the camera and numeral 19 denotes a serial communication terminal. The ROM 13, the RAM 14 and the display control circuit 15 are connected to the CPU 12 through an address bus and a data bus. Numeral 21 corresponds to the IC card 3 in Fig. 1A, numeral 22 denotes a ROM and numeral 23 denotes a RAM.

The terminal device 11 is usually operated by the program stored in the ROM 13. When the IC card 21 is connected and the operation thereby is selected, the terminal device 11 is operated by the program stored in the ROM 22 of the IC card 21.

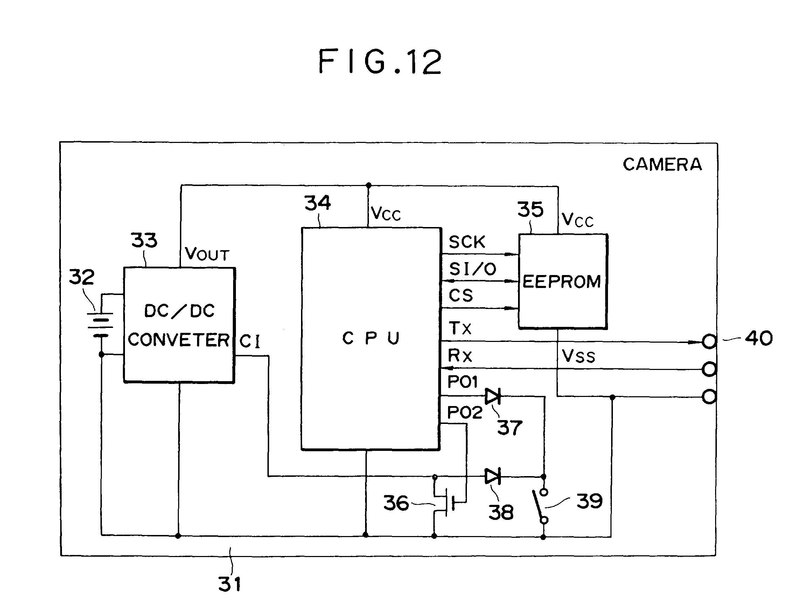

Fig. 12 shows a portion of the configuration of the camera in the present invention. Numeral 31 corresponds to the camera 1 in Fig. 1A, numeral 32 denotes a battery, and numeral 33 denotes a DC-DC converter for converting the battery voltage to a stabilized voltage, which has a power input terminal connected to the battery 32 and a CI terminal which is an input terminal for controlling an output. When the CI terminal is grounded, a stabilized voltage is produced at an output terminal Vout. Numeral 34 denotes a CPU which comprises arithmetic operation means, comparison means, a ROM and a RAM. It further comprises memory means, timer means and input/output means and controls the camera. Numeral 35 denotes an EEPROM which is electrically writable and erasable memory means, numeral 36 denotes an FET, numerals 37 and 38 denote diodes, numeral 39 denotes a switch and numeral 40 denotes a communication terminal.

The switch 39 serves to start the camera. It may be turned on at a first stroke of a release button of the camera. When it is turned on, a signal is applied to the CI terminal of the DC-DC converter 33 through the diode 37 so that the DC-DC converter 33 starts the operation and produces a voltage at the output terminal Vout. Thus, the power is supplied to the microcomputer 34, the EEPROM 35 and other electronic circuits (not shown). Thus, the microcomputer 34 starts the operation.

As the microcomputer 34 starts the operation, it produces a "1" level output at an output port PO2. It is applied to a gate terminal of the FET 36 so that the FET 36 is turned on and a drain terminal thereof assumes a "0" level. Thus, the CI terminal of the DC-DC converter 33 is "0" level and the DC-DC converter 33 continues the operation.

A predetermined time after the end of the manipulation of the camera, the output port PO2 of the microcomputer 34 produces the "0" level signal. Thus, the CI terminal of the DC-DC converter 33 is "1" level and the operation of the camera is terminated. The input port PO1 of the microcomputer 34 reads the status of the switch 39. It is connected to one end of the switch 39 through the diode 37.

The operation when "COMMUNICATION WITH CAMERA" in Fig. 2 is selected is now explained. When "COMMUNICATION WITH CAMERA" is selected by the terminal device 2, the terminal device 2 produces the serial signal at the serial terminal 19 of Fig. 9. In order to identify the IC card loaded to the terminal device and the type of camera to be communicated with, a command requesting the camera type code is transmitted. The camera responds to the command by producing the type code at the serial terminal (40 in Fig. 10). The terminal device compares the code with the information of the IC card, and if they match, it permits further communication and sends a command to the camera not to time out the power-off timer of the camera.

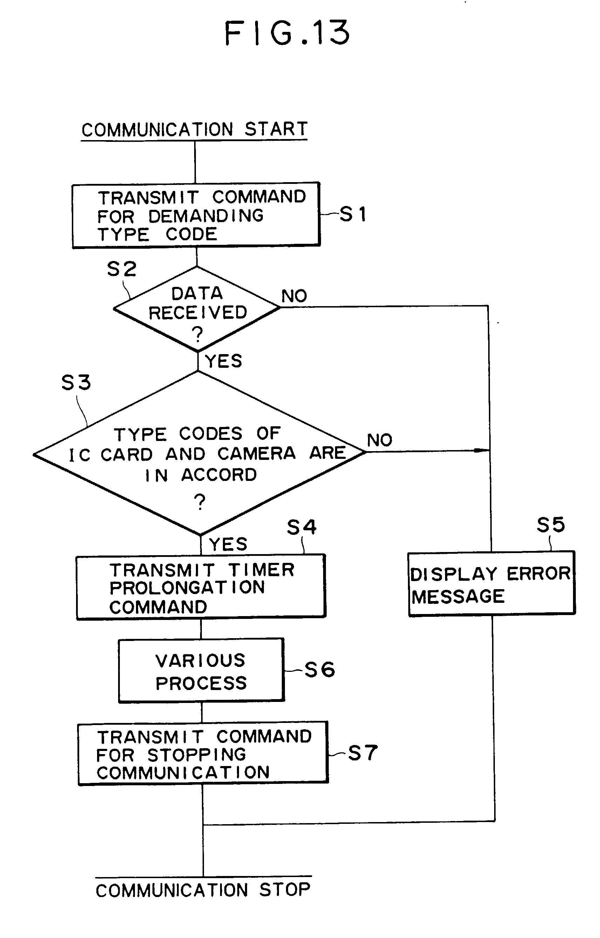

A flow chart of the above process is shown in Fig. 13. When the communication is started, the terminal device 2 sends the type code request command to the camera 1 in a step 1. In a step 2, it receives data from the camera 1. In a step 3, it compares the received data with the code in the IC card, and if they match, it sends the timer prolongation command to the camera in a step 4.

If data is not received from the camera within a predetermined time or if the code does not match to the code in the IC card in the step 3, an error message is displayed in the terminal device in a step 5 and the communication is terminated. In the step 4, a timer-off inhibit command may be sent to the camera. In a step 6, a command is sent to the camera and the information of the camera is received. In a step 7, an end of communication command is sent to the camera, and the camera resumes the normal timer prolongation operation.

Alternatively, the communication may be repeatedly made at an interval shorter than the timer interval of the camera. In this manner, the power-off of the camera during the operation of the terminal device and the disconnection of data communication between the terminal device and the camera are prevented.

## Claims

1. A camera control system for controlling the operation of a camera (1; 31) operating according to a plurality of individually selectable and settable operating conditions, said system comprising a portable terminal device (2; 11), a memory card (3; 21) detachably connectable to the terminal device and transmission means (4) for enabling the terminal device to communicate with the camera, the terminal device comprising a display means (6; 16) and being arranged to read information relating to said plurality of operating conditions stored in the memory card, to select one of said plurality of operating conditions, to display in said display means an operating setting of the selected operating condition and to transmit control data to said camera through said transmission means to set said operating setting of said selected operating condition in said camera.

2. A system according to claim 1 wherein said control data sets said operating setting according to parameters of said selected operating condition.

3. A system according to claim 1 or 2 wherein said terminal device (2; 11) is arranged to read a type code indicating the type of said camera (1; 31), and to compare the type code with the information stored in the memory card to determine whether the memory card (3; 21) is compatible with the camera.

4. A system according to claim 1, 2 or 3 wherein said terminal device (2; 11) is arranged to send a command to prolong an interval of a power auto-shut-off timer of the camera (1; 31).

5. A system according to any of claims 1-3 wherein said display means (6; 16) of said terminal device (2; 11) is arranged to display an error message when an operating setting incompatible with another operating setting in the camera (1; 31) is to be set by said terminal device.

6. A system as claimed in any of claims 1-5, further comprising a camera (1; 31) adapted to receive data from said transmission means.

7. A system according to any of claims 1-6, wherein said transmission means (4) includes at least three signal lines, namely a ground line, a signal line (TX) for transmitting a stepping synchronous communication system signal and a receiving signal line (RX).

8. A method of controlling the operation of a camera (1; 31) operating according to a plurality of individually selectable and settable operating conditions using a portable terminal device (2; 11), a memory card (3; 21) detachably connectable to the terminal device and transmission means (4) for enabling the terminal device to communicate with the camera,
said method comprising the steps of reading information relating to said plurality of operating conditions from said memory card with said terminal device, selecting one of said plurality of operation conditions, displaying on said terminal device an operating setting of the selected operating condition and transmitting control data to said camera through said transmission means to set said operating setting of said selected operating condition in said camera.

9. A method according to claim 8, further comprising sending a command from said terminal device (2; 11) to said camera to prolong an interval of a power auto-shut-off timer on the camera.

10. A method according to claim 8 or 9, further comprising displaying an error message on said terminal device (2; 11) when an operating condition incompatible with an operating condition in the camera is to be set by said terminal device.

## Patentansprüche

1. Kamerasteuersystem zum Steuern des Betriebs einer Kamera (1; 31), die gemäß einer Mehrzahl individuell auswählbarer und einstellbarer Betriebsbedingungen arbeitet, wobei das System umfaßt:
- ein tragbares Terminalgerät (2; 11),
- eine Speicherkarte (3; 21), die lösbar an dem Terminalgerät ankoppelbar ist, und
- eine Übertragungseinrichtung (4), die eine Kommunikation des Terminalgeräts mit der Kamera gestattet, wobei das Terminalgerät eine Anzeigeeinrichtung (6; 16) aufweist und derart ausgebildet ist, daß es Information bezüglich der Mehrzahl von Betriebsbedingungen, die in der Speicherkarte gespeichert ist, liest, um eine von den mehreren Betriebsbedingungen auszuwählen, auf der Anzeigeeinrichtung eine Betriebseinstellung der ausgewählten Betriebsbedingung anzuzeigen und Steuerdaten über die Übertragungseinrichtung an die Kamera zu senden, um die Betriebseinstellung der ausgewählten Betriebsbedingung in der Kamera vorzunehmen.

2. System nach Anspruch 1, bei dem
die Steuerdaten die Betriebseinstellung gemäß Parametern der ausgewählten Betriebsbedingung einstellen.

3. System nach Anspruch 1 oder 2, bei dem
das Terminalgerät (2; 11) so ausgebildet ist, daß es einen Typencode liest, welcher den Typ der Kamera (1; 31) angibt, und den Typencode mit in der Speicherkarte gespeicherter Information vergleicht, um zu ermitteln, ob die Speicherkarte mit der Kamera kompatibel ist.

4. System nach Anspruch 1, 2 oder 3, bei dem
das Terminalgerät (2; 11) so ausgebildet ist, daß es einen Befehl zum Verlängern eines Zeitintervalls eines Leistungs-Selbstabschaltzeitgebers der Kamera (1; 31) ausgibt.

5. System nach einem der Ansprüche 1 bis 3, bei dem
die Anzeigeeinrichtung (6; 16) des Terminalgeräts (2; 11) derart ausgebildet ist, daß sie eine Fehlernachricht dann anzeigt, wenn eine mit einer weiteren Betriebseinstellung der Kamera (1; 31) nicht kompatible Betriebseinstellung von dem Terminalgerät eingestellt werden soll.

6. System nach einem der Ansprüche 1 bis 5,
weiterhin umfassend eine Kamera (1; 31), die für den Empfang von Daten von der Übertragungseinrichtung ausgebildet ist.

7. System nach einem der Ansprüche 1 bis 6, bei dem
die Übertragungseinrichtung (4) mindestens drei Signalleitungen beinhaltet, nämlich eine Erdungsleitung, eine Signalleitung (TX) zum Übertragen eines stufenförmigen, synchronen Kommunikationssystemsignals und eine Empfangssignalleitung (RX).

8. Verfahren zum Steuern des Betriebs einer Kamera (1; 31), die gemäß einer Mehrzahl individuell auswählbarer und einstellbarer Betriebsbedingungen arbeitet, unter Verwendung eines tragbaren Terminalgeräts (2; 11), einer Speicherkarte (3; 21), die lösbar an das Terminalgerät ankoppelbar ist, und einer Übertragungseinrichtung (4), die das Terminalgerät in die Lage versetzt, mit der Kamera zu kommunizieren,
wobei das Verfahren die Schritte beinhaltet
- Lesen von Information bezüglich der mehreren Betriebsbedingungen aus der Speicherkarte mit Hilfe des Terminalgeräts,
- Auswählen einer aus den mehreren Betriebsbedingungen,
- Anzeigen einer Betriebseinstellung der ausgewählten Betriebsbedingung an dem Terminalgerät, und
- Übertragen von Steuerdaten zu der Kamera über die Übertragungseinrichtung, um die Betriebseinstellung der ausgewählten Betriebsbedingung in der Kamera vorzunehmen.

9. Verfahren nach Anspruch 8,
weiterhin umfassend das Senden eines Befehls von dem Terminalgerät (2; 11) zu der Kamera, um eine Zeitspanne eines Leistungs-selbstabschaltZeitgebers einer Kamera zu verlängern.

10. Verfahren nach Anspruch 8 oder 9,
weiterhin umfassend das Anzeigen einer Fehlernachricht auf dem Terminalgerät (2; 11) dann, wenn eine mit einer Betriebsbedingung in der Kamera nicht kompatible Betriebsbedingung von dem Terminalgerät eingestellt werden soll.

## Revendications

1. Système de commande d'appareil de prise de vues (1;31) fonctionnant en fonction d'une pluralité de conditions de fonctionnement pouvant être sélectionnées et réglées individuellement, ledit système comprenant un dispositif terminal portable (2;11), une carte de mémoire (3;21) pouvant être connectée de façon amovible au dispositif terminal et des moyens de transmission (4) pour permettre au dispositif terminal de communiquer avec l'appareil de prise de vues, et le dispositif terminal comprenant des moyens d'affichage (6;16) et étant agencé de manière à lire une information concernant ladite pluralité de conditions de fonctionnement mémorisées dans la carte de mémoire, pour sélectionner l'une de ladite pluralité de conditions de fonctionnement, et pour afficher dans lesdits moyens d'affichage un réglage de fonctionnement de la condition de fonctionnement sélectionnée, et transmettre des données de commande audit appareil de prise de vues par l'intermédiaire desdits moyens de transmission pour régler ledit réglage de fonctionnement de ladite condition de fonctionnement sélectionnée dans ledit appareil de prise de vues.

2. Système selon la revendication 1, dans lequel lesdites données de commande règlent ledit réglage de fonctionnement en fonction des paramètres desdites conditions de fonctionnement sélectionnées.

3. Système selon la revendication 1 ou 2, dans lequel ledit dispositif terminal (2;11) est agencé de manière à lire un code de type indiquant le type dudit appareil de prise de vues (1;31) et comparer le code de type à l'information mémorisée dans la carte de mémoire pour déterminer si la carte de mémoire (3;21) est compatible avec l'appareil de prise de vues.

4. Système selon la revendication 1, 2 ou 3, dans lequel ledit dispositif terminal (2;11) est agencé de manière à envoyer un ordre pour prolonger un intervalle d'un interrupteur mécanique automatique de l'appareil de prise de vues (1;31).

5. Système selon l'une quelconque des revendications 1 à 3, dans lequel lesdits moyens d'affichage (6;16) dudit dispositif terminal (2;11) sont agencés de manière à afficher un message d'erreur lorsqu'un réglage de fonctionnement incompatible avec un autre réglage de fonctionnement de l'appareil de prise de vues (1;31) doit être réglé par ledit dispositif terminal.

6. Système selon l'une quelconque des revendications 1 à 5, comprenant en outre un appareil de prise de vues (1;31) adapté de manière à recevoir des données de la part desdits moyens de transmission.

7. Système selon l'une quelconque des revendications 1 à 6, dans lequel lesdits moyens de transmission (4) comprennent au moins trois lignes de transmission de signaux, à savoir une ligne de masse, une ligne de transmission de signaux (TX) pour transmettre un signal du système de communication synchrone pas-à-pas et une ligne (RX) de transmission de signaux de réception.

8. Procédé pour commander le fonctionnement d'un appareil de prise de vues (1;31) fonctionnant conformément à une pluralité de conditions de fonctionnement pouvant être sélectionnées et réglées de façon individuelle, en utilisant un dispositif terminal portable (2;11), une carte de mémoire (3;21) pouvant être connectée de façon amovible au dispositif terminal, et des moyens de transmission (4) pour permettre au dispositif terminal de communiquer avec l'appareil de prise de vues,
ledit procédé comprenant les étapes consistant à lire une information associée à ladite pluralité de conditions de fonctionnement à partir de ladite carte de mémoire avec ledit dispositif terminal, sélectionner l'une de ladite pluralité de conditions de fonctionnement, afficher sur le dispositif d'affichage un réglage de fonctionnement de la condition sélectionnée de fonctionnement et transmettre des données de commande audit appareil de prise de vues par l'intermédiaire desdits moyens de transmission pour régler ledit réglage de fonctionnement de ladite condition de fonctionnement sélectionnée dans ledit appareil de prise de vues.

9. Procédé selon la revendication 8, comprenant en outre l'envoi d'une commande depuis ledit dispositif terminal (2;11) audit appareil de prise de vues pour prolonger un intervalle d'un interrupteur mécanique automatique installé dans l'appareil de prise de vues.

10. Procédé selon la revendication 8 ou 9, comprenant en outre l'affichage d'un message d'erreur sur ledit dispositif terminal (2;11) lorsqu'une condition de fonctionnement incompatible avec une condition de fonctionnement d'un appareil de prise de vues doit être réglée par ledit dispositif terminal.
